# EUROPEAN PATENT APPLICATION

(11) **EP 4 716 123 A1**
(43) Date of publication of application: **25.03.2026**
(21) Application number: 24200983.5
(22) Date of filing: 18.09.2024
(51) Int. Cl.: H04L 1/00, H04B 10/27, H04Q 11/00

(54) **CONDITIONAL FORWARD ERROR CORRECTION DECODING IN A PASSIVE OPTICAL NETWORK**

(71) Applicant: Nokia Solutions and Networks Oy, 02610 Espoo (FI)
(72) Inventor: LEFEVRE, Yannick, 3001 Heverlee (BE); Van Hoof, Werner, 2630 Aartselaar (BE)
(74) Representative: Ipsilon Belgium

(57) **Abstract**

Example embodiments describe an optical network unit, ONU (131 - 134), configured to communicate in a passive optical network, PON (100), with an optical line terminal, OLT (110); wherein the ONU is configured to receive a stream (210) of forward error correction, FEC, codewords (211) comprising at least a portion of respective downstream frames (221) broadcasted by the OLT over the PON; wherein the respective downstream frames comprise a header (222) and a payload (223); and wherein the header includes one or more error correction bits (234) for error correcting the header by the ONU, and an identifier (232) indicative for which of the one or more ONUs the payload is intended; wherein the ONU is characterized in that it is further configured to perform: first, error correcting (201, 241) the headers (222) of the downstream frames (221) based on the one or more error correction bits (234) within the respective headers; then, identifying (202, 242) downstream frames (221) with a payload (223) intended for the ONU based on the identifier (232) within the error-corrected headers; and thereafter, FEC decoding (203, 250) the one or more FEC codewords that comprise at least a portion of the identified downstream frames.

## Description

### Field of the Invention

Various example embodiments relate to forward error correcting, FEC, in passive optical networks, PONs.

### Background of the Invention

In a passive optical network, PON, an optical line terminal, OLT, broadcasts a downstream bitstream to a plurality of optical network units, ONUs. The downstream bitstream comprises a plurality of successive downstream frames, respectively intended for one or more of the ONUs. The downstream bitstream is typically forward error correction, FEC, encoded at the OLT side before transmission. As such, the downstream bitstream comprises a plurality of FEC codewords when received by the ONUs. This allows the ONUs to recover the data within the downstream bitstream, even when a number of errors are introduced due to the transmission over the PON.

Typically, the ONUs first FEC decode the entire downstream bitstream received from the OLT. FEC decoding refers to identifying errors within the respective FEC codewords and, if necessary and possible, correcting the identified errors. In doing so, each ONU within the PON obtains a complete FEC decoded version of the downstream bitstream, i.e. of all the FEC codewords. Thereafter, the ONUs extract the headers of the respective downstream frames as these include an identifier allowing to determine for which ONU the payload of the downstream frame is intended. The respective ONUs can then retain and process the payloads within the downstream frames intended for them and ignore the other downstream frames, i.e. idle frames and frames intended for other ONUs.

This has the problem that an ONU performs FEC decoding for all received FEC codewords, even if the FEC codewords do not comprise any data intended for that ONU. In other words, FEC codewords comprising idle downstream frames or downstream frames intended for other ONUs are also FEC decoded, only to be discarded after inspecting the downstream frame headers. This results in excessive and futile power consumption at the ONU, in particular when there is limited traffic within the PON and, thus, many idle downstream frames are included within the downstream bitstream.

Additionally, recent PON standards are moving towards implementing low density parity check, LDPC, as FEC encoding technique rather than the previously prevalent Reed Solomon, RS, FEC encoding technique. The power consumption of LDPC decoding is substantially higher than RS decoding. As such, the problem of excessive and futile power consumption associated with FEC decoding the entire downstream bitstream is even higher for the latest and next-generation PON technologies.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to reduce power consumption associated with FEC decoding in a passive optical network, PON.

This object is achieved, according to a first example aspect of the present disclosure, by an optical network unit, ONU, configured to communicate in a passive optical network, PON, with an optical line terminal, OLT; wherein the ONU is configured to receive a stream of forward error correction, FEC, codewords comprising at least a portion of respective downstream frames broadcasted by the OLT over the PON; wherein the respective downstream frames comprise a header and a payload; and wherein the header includes one or more error correction bits for error correcting the header by the ONU, and an identifier indicative for which of the one or more ONUs the payload is intended; wherein the ONU is characterized in that it is further configured to perform:
- first, error correcting the headers of the downstream frames based on the one or more error correction bits within the respective headers;
- then, identifying downstream frames with a payload intended for the ONU based on the identifier within the error-corrected headers; and
- thereafter, FEC decoding the one or more FEC codewords that comprise at least a portion of the identified downstream frames.

In doing so, the FEC decoding performed by the ONU is limited to the FEC codewords comprising data intended for the ONU rather than FEC decoding all FEC codewords. In other words, this allows avoiding that the ONU unnecessarily FEC decodes FEC codewords comprising idle downstream frames and/or downstream frames intended for other ONUs. This has the advantage that it can substantially reduce the power consumption of FEC decoding within the ONU and, thus, reduce the power consumption of the ONU. The power consumption is particularly reduced when there is low traffic to the ONU, e.g. during nighttime, during which a substantial number of idle downstream frames are typically included within the downstream. It is a further advantage that the power consumption of this FEC decoding scales with the amount of traffic to the ONU. It is a further advantage that this can easily be incorporated into existing ONUs operating according to current PON standards.

According to an example embodiment, the optical network unit, ONU, may further be configured to perform locating a first header within the stream of FEC codewords based on a length of one or more synchronization structures that precede the downstream frames within the stream of FEC codewords.

The stream of FEC codewords received by the ONU may be structured as a fundamental data unit that repeats in time, e.g. a physical layer, PHY-, frame. The first or initial portion of this repeating fundamental data unit may comprise the one or more synchronization structures, followed by a plurality of successive downstream frames. The one or more synchronization structures may be structures that are configured to support the synchronization and framing functions of the passive optical network, e.g. a Physical Synchronization Block downstream, PSBd, structure and a Frame Synchronization, FS, header according to the ITU-T G.984 standard, the ITU-T G.987 standard, or the ITU-T G.9804 standard. The ONU may thus be configured to locate the first header within the stream of FEC codewords by accounting for the length of the one or more synchronization structures. The length of the one or more synchronization structures may be predetermined and/or fixed. Alternatively or complementary, the length of the one or more synchronization structures may be retrieved from one or more of the respective synchronization structures. For example, the length of a PSBd structure may be predetermined and fixed according to the PON standard, while the length of the FS header may be retrieved from a data field within the FS header.

According to an example embodiment, the optical network unit, ONU, may further be configured to perform locating a header of a downstream frame within the stream of FEC codewords based on a payload length of a preceding downstream frame.

To be able to error correct the headers before FEC decoding, the ONU should be capable of locating the respective headers within the stream of FEC codewords. This can be achieved by error correcting the first header within the stream of FEC codewords, and retrieving, from the error-corrected header, an indicator for the length of the payload carried within the downstream frame. This process may then be repeated for the successive downstream frames and the respective headers therein. In other words, the payload length indicator within an error-corrected header allows the ONU to determine where to find the start of the next downstream frame and, thus, the start of the next header. The retrieved indicator may, for example, be a value retrieved from a payload length indication, PLI, field according to the ITU-T G.984 standard. The ONU may further account for the parity at the end of each FEC codeword when locating the first header of the next FEC codeword.

According to an example embodiment, the optical network unit, ONU, may further be configured to perform locating one or more headers of the downstream frames at respective predetermined positions within the stream of FEC codewords.

In other words, headers may be inserted at the respective predetermined positions within the stream of FEC codewords, e.g. by the OLT. These predetermined positions may be fixed, e.g. every 25 µs. Alternatively or complementary, these predetermined positions may be communicated to the ONU in the downstream. In doing so, the ONU is provided in advance with some hooks or pick-up points where it knows that a header will be located. This allows the ONU to continue the conditional FEC decoding according to the present disclosure from these pick-up points when it loses track of the header locations, i.e. when error correcting at least one of the preceding headers failed that comprises the payload length indicator used to determine the location of the next header.

According to an example embodiment, the optical network unit, ONU, may further be configured to perform FEC decoding the one or more FEC codewords that comprise at least one header that is non-correctable based on the one or more error correction bits.

In other words, if a downstream frame header can not be corrected based on the one or more error correction bits, or the ONU fails to correct the downstream frame header based on the one or more error correction bits, this non-correctable header may be FEC decoded regardless of whether it comprises a payload intended for the ONU or not. This allows avoiding that the ONU misses downstream frames comprising a payload intended for it.

According to an example embodiment, the optical network unit, ONU, may further be configured to perform inspecting the at least one non-correctable header for the identifier after FEC decoding the one or more FEC codewords comprising the at least one non-correctable header.

In other words, identifying one or more downstream frames with a payload intended for the ONU may be achieved by inspecting the FEC decoded codeword comprising the at least non-correctable header. This allows determining whether the downstream frame with the at least one non-correctable header comprises a payload intended for the ONU. If so, the ONU may further process the payload of said downstream frame. This allows avoiding that the ONU misses downstream frames comprising a payload intended for it.

According to an example embodiment, the optical network unit, ONU, may further be configured to filter the stream of FEC codewords before the FEC decoding by dropping the FEC codewords without a payload intended for the ONU and providing the remaining FEC codewords to a FEC decoder circuitry configured to FEC decode the remaining FEC codewords.

In other words, the FEC decoder circuitry may only receive a filtered selection of the FEC codewords within the stream instead of receiving all FEC codewords. The filtered selection of FEC codewords may comprise FEC codewords that comprise at least a portion of the downstream frames with a payload intended for the ONU and FEC codewords that comprise at least one non-correctable header. Dropping some of the FEC codewords prior to the FEC decoding has the advantage that it can reduce the latency incurred due to the FEC decoding pipeline.

According to an example embodiment, the optical network unit, ONU, may further be configured to perform determining the position of a first header within at least each FEC codeword following one or more consecutive dropped FEC codewords, based on a payload length of the last downstream frame within the one or more dropped FEC codewords and a number of parity bits within the one or more dropped FEC codewords.

If the FEC decoder circuitry receives a filtered selection of the FEC codewords, an additional header inspection after FEC decoding the FEC codewords may fail as the additional header inspection cannot determine the location of the headers within an FEC codeword following a dropped FEC codeword. This is because these header locations may be determined based on payload length information within the headers of the dropped FEC codeword, which are no longer available at the additional header inspection.

By determining the position of the first header within each FEC codeword following a dropped FEC codeword and providing this first header position to the additional header inspection following the FEC decoding, the headers can be inspected after FEC decoding the FEC codewords. This may, for example, be done to inspect headers that are non-correctable based on the one or more error correction bits.

According to an example embodiment, the optical network unit, ONU, may further be configured to perform FEC decoding of a FEC codeword if the number of downstream frames within the FEC codeword exceeds a threshold.

This allows avoiding that the latency incurred due to error correcting and inspecting a substantial amount of relatively small downstream frames within a FEC codeword before FEC decoding becomes excessive. The probability of having at least one non-correctable header within a FEC codeword with such a substantial amount of downstream frames is also higher, the presence of which would lead to even additional latency as the codeword may be FEC decoded regardless of whether it comprises a payload intended for it or not.

According to an example embodiment, the FEC codewords are encoded by a Low-Density Parity-Check, LDPC, code.

The power consumption of LDPC decoding is relatively high and may be one of the largest contributors to the total power consumption of ONUs, e.g. in 25G and 50G PONs. As such, the power savings may be even more significant when the used FEC code is LDPC.

According to an example embodiment, the FEC codewords are encoded by a Reed Solomon code.

According to an example embodiment, the one or more error correction bits may comprise bits encoded by a Bose-Chaudhuri-Hocquenghem, BCH, code.

According to an example embodiment, the stream of FEC codewords is a physical layer, PHY-, frame.

According to a second example aspect, the invention relates to an optical line terminal, OLT, configured to communicate in a passive optical network, PON, with one or more optical network units, ONUs; wherein the OLT is configured to receive a stream of forward error correction, FEC, codewords comprising at least a portion of respective upstream frames transmitted by the ONUs; wherein the respective upstream frames comprise a header and a payload; and wherein the header includes one or more error correction bits for error correcting the header by the OLT; wherein the OLT is characterized in that it is further configured to perform:
- first, error correcting the headers of the upstream frames based on the one or more error correction bits within the respective headers;
- then, identifying upstream frames with a payload intended for the OLT based on the error-corrected headers; and
- thereafter, FEC decoding the one or more FEC codewords that comprise at least a portion of the identified upstream frames.

Typically, OLTs first FEC decode the entire upstream bitstream received from the ONUs within the PON. In doing so, the OLT obtains a complete FEC decoded version of the upstream bitstream, i.e. of all the FEC codewords. It is only after FEC decoding the entire upstream bitstream that the idle upstream frames, i.e. frames without a payload intended for the OLT, are identified and ignored. This results in excessive and futile power consumption at the OLT, in particular when there is limited traffic within the PON and thus many idle upstream frames are present within the upstream bitstream.

By first error correcting the headers of the upstream frames based on one or more error correction bits and identifying upstream frames with a payload intended for the OLT based on the error-corrected headers, the FEC decoding can be limited to the one or more FEC codewords that comprise at least a portion of non-idle upstream frames rather than FEC decoding all FEC codewords. A non-idle upstream frame may be any upstream frame that comprises a non-idle payload with at least some user data. Thus, this allows avoiding that the OLT unnecessarily FEC decodes FEC codewords that only comprise idle upstream frames. This has the advantage that it can substantially reduce the power consumption of FEC decoding within the OLT and, thus, reduce the power consumption of the OLT. The power consumption is particularly reduced when there is low traffic to the OLT, e.g. during nighttime, during which a substantial number of idle upstream frames are typically included within the upstream bursts. It is a further advantage that the power consumption of this FEC decoding scales with the amount of traffic to the OLT. It is a further advantage that this can easily be incorporated into existing OLTs operating according to current PON standards.

### Brief Description of the Drawings

Fig. 1 shows a schematic block diagram of an example passive optical network, PON;
Fig. 2 shows an example embodiment of an optical network unit, ONU, configured to perform conditional FEC decoding of a stream of FEC codewords;
Fig. 3 shows an example embodiment of the ONU that is further configured to handle non-correctable headers;
Fig. 4 shows an alternative example embodiment of the ONU configured to perform conditional FEC decoding of a stream of FEC codewords; and
Fig. 5 shows steps performed by an optical line terminal, OLT, according to an example aspect.

### Detailed Description of Embodiment(s)

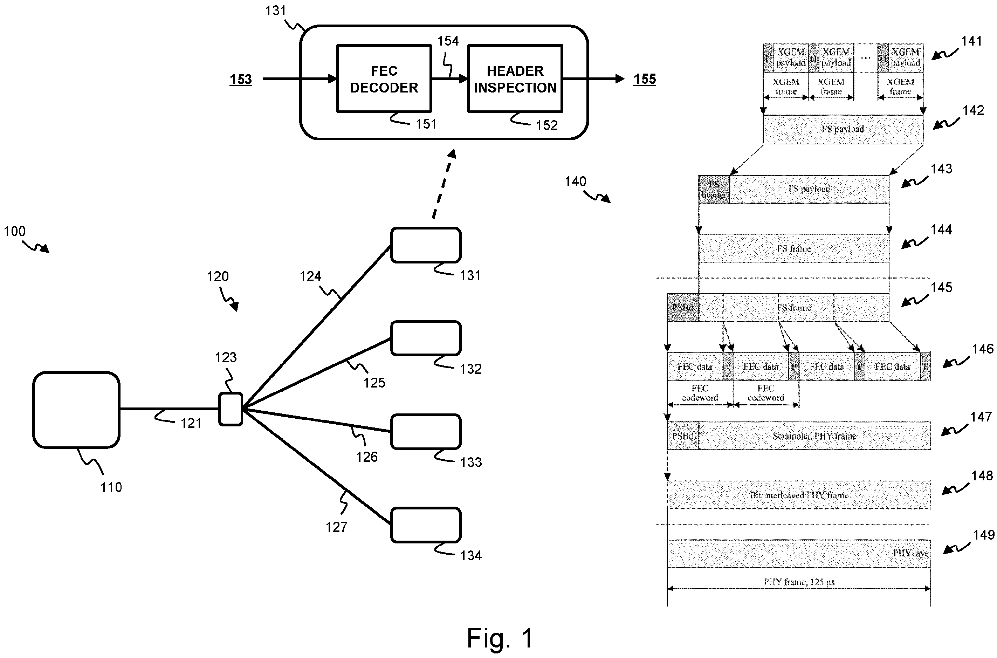

Fig. 1 shows a schematic block diagram of an example passive optical network 100, PON. The optical network 100 comprises an optical line terminal 110, OLT, and a plurality of optical network units, ONUs 131, 132, 133, 134 connected via an optical distribution network, ODN 120. In this example, the OLT 110 is connected to four ONUs 131, 132, 133, 134, however, the OLT 110 may be connected to fewer or more endpoints. The ODN 120 has a tree structure comprising an optical feeder fibre 121, one or more passive optical splitters/multiplexors 123, and a plurality of optical distribution fibres or drop fibres 124, 125, 126, 127 that connect the splitter/multiplexor 123 to the respective ONUs 131, 132, 133, 134. In the downstream, the passive optical splitter/multiplexor 123 splits the optical signal coming from the OLT 110 into lower power optical signals for the connected ONUs 131, 132, 133, 134, while in the upstream direction, the passive optical splitter/multiplexor 123 multiplexes the optical signals coming from the connected ONUs 131, 132, 133, 134 into a burst signal for the OLT 110.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

Fig. 1 further shows an example 140 of downstream packet mapping according to the ITU-T G.9804.2 standard. The downstream packet mapping 140 allows mapping higher-layer SDU packets (not shown in Fig. 1) to the physical layer, PHY-, frame 149, i.e. the bit stream that is transmitted over the PON 100.

The SDU packets are first encapsulated in a series of XGEM frames 141, also generally referred to as downstream frames. Each downstream frame 141 comprises a header and a payload. The downstream frames jointly form the Frame Synchronization, FS, payload 142. The FS payload 142 is prepended with a FS header 143 to form an FS frame 144. The FS header is a synchronization structure that provides frame synchronization and identification of frame boundaries. The FS frame 144 is in turn prepended by a downstream physical synchronization block, PSBd 145. The PSBd is a synchronization structure that allows the ONUs 131 - 134 to synchronize with the OLT 110 for downstream communication. Hereafter, the obtained bit stream 145 is typically FEC encoded to obtain a stream of FEC codewords 146. The FEC codewords 146 may be obtained by dividing bitstream 145 into codewords and generating, for each codeword, parity based on the used FEC code. The used FEC code may, for example, be a Reed Solomon code or a Low-Density Parity-Check, LDPC, code. This allows the ONUs 131 - 134 to recover the FEC data from the downstream, i.e. bit stream 145, even when a number of errors are introduced due to the transmission over the PON 100. The stream of FEC codewords 146 may further be scrambled 147 and interleaved 148 to obtain the PHY-frame 149 transmitted from the OLT 110 to the ONUs 131 - 134.

Typically, the ONUs 131 - 134 first FEC decode the entire downstream bitstream received from the OLT 110. FEC decoding refers to identifying errors within the respective FEC codewords 146 and, if necessary and possible, correcting the identified errors. This may, for example, be performed by a FEC decoder circuitry 151. The FEC decoder circuitry may thus receive 153 the PHY-frames 149 transmitted by the OLT 110. It will be apparent that the FEC decoder circuitry 151 is configured to FEC decode the received stream of FEC codewords 153 according to the same FEC code as used to encode them.

By the FEC decoding performed at 151, each ONU 131 - 134 within the PON obtains a complete FEC decoded version 154 of the stream of FEC codewords 146 broadcasted by the OLT 110, i.e. a decoded version of all the FEC codewords. Thereafter, the ONUs 131 - 134 extract the headers of the respective downstream frames 141 from the stream of decoded FEC codewords 154. The extracted headers are subsequently inspected in 152 as the headers include an XGEM port identifier allowing to determine for which ONU 131 - 134 the payload of that XGEM frame is intended. The respective ONUs 131 - 134 can then retain and process the payloads within the XGEM frames intended for them 155 and ignore the other XGEM frames, i.e. idle frames and frames intended for other ONUs.

This has the problem that an ONU 131 - 134 performs FEC decoding for all FEC codewords within the stream 153, even if the FEC codewords do not comprise any data intended for that ONU. In other words, FEC codewords comprising idle XGEM frames or XGEM frames intended for other ONUs are also FEC decoded, only to be discarded after inspecting 152 the XGEM header. This results in excessive and futile power consumption, in particular when there is limited traffic within the PON 100 and, thus, many idle frames are included within the downstream bitstream.

Additionally, recent PON standards such as, for example, ITU-T G.9804 are increasingly implementing low density parity check, LDPC, as FEC encoding code rather than the previously prevalent Reed Solomon, RS, code. The power consumption of LDPC decoding is substantially higher than RS decoding. As such, the problem of excessive and futile power consumption associated with FEC decoding the entire downstream bitstream is even higher for the latest and next-generation PON technologies and, thus, promises to become even more relevant in the near future.

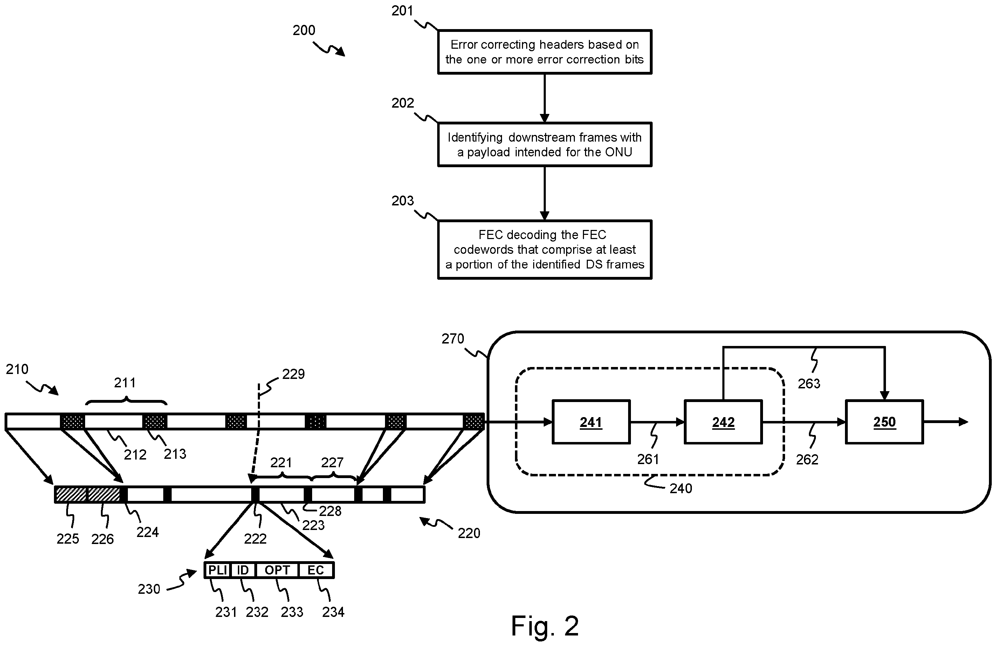

Fig. 2 shows an example embodiment of an optical network unit, ONU 270, configured to perform conditional FEC decoding of the received stream 210 of FEC codewords 211. To this end, ONU 270 is configured to limit the FEC decoding to the FEC codewords 211 that comprise at least a portion of a downstream frame 221 with a payload intended for the ONU 270.

The received stream 210 of FEC codewords 211 may be a PHY-frame as described above in relation to Fig. 1. The respective FEC codewords 211 comprise data 212 and a parity 213. The respective FEC codewords 211 may be encoded by a Reed Solomon, RS, code; a Low-Density Parity-Check, LDPC, code; or any other FEC code. The respective FEC codewords 211 comprise at least a portion of respective downstream frames 220. In other words, a FEC codeword 211 may comprise a fractional or non-integer number of downstream frames 220. For example, FEC codeword 211 comprises approximately 1.6 downstream frames as illustrated in Fig. 2.

The respective downstream frames 221 comprise a header 222 and a payload 223. The headers 222 comprise at least one or more error correction bits 234 and an identifier 232. The identifier 232 within the header of a downstream frame 221 allows an ONU to determine whether the downstream frame 221 is intended for that ONU or not. These identifiers 232 may be assigned to logical connections within the respective ONUs of a PON. These identifiers 232 typically correspond to a specific data flow associated with a particular service or user. By inspecting the identifier 232 and comparing it with the identifiers assigned to the logical connections of the ONU, the ONU may thus determine whether the downstream frame is intended for it. An example of such an identifier 232 is the XGEM port-ID according to the ITU-T G.987 standards or the ITU-T G.9804 standard.

The one or more error correction bits 234 within the header 222 of a downstream frame 221 typically allow an ONU to determine whether it received a valid header 222 or if it comprises excessive errors. Typically, ONUs operating according to current PON standards are configured to detect errors and/or correct the detected errors based on these bits 234 after FEC decoding the stream of FEC codewords 210. An example of such one or more error correction bits 234 are the bits included within the Header Error Control, HEC, field of XGEM headers according to the ITU-T G.987 standards or the ITU-T G.9804 standard. The ONU 270 according to the present disclosure is configured to use these available error correction bits 234 to correct the error within headers 222 of downstream frames 221 before FEC decoding.

The error correction bits 234 may comprise bits encoded by a Bose-Chaudhuri-Hocquenghem, BCH, code. The error correction bits 234 may, for example, comprise 12 bits of a BCH(63, 12, 2) code, which allows correcting up to 2 bit errors. Thus, in the example of an XGEM frame according to the ITU-T G.987 standards, at most 2 errors among 63 header bits can be corrected. Most ONUs have a high probability of being able to correct a header 222 based on the BCH code, i.e. the one or more error correction bits 234. In other words, most of the time a downstream frame header 222 can be corrected purely by decoding based on the one or more error correction bits 234, without having to FEC decode first.

The ONU 270 is thus configured to first perform error correcting 201 the headers 222 of the downstream frames 220 based on the one or more error correction bits 234. This may, for example, be performed by an error correction circuitry 241 provided within the ONU 270. The error-corrected headers 261 may then be inspected, e.g. by a header inspection circuitry 242, to retrieve the respective identifiers 232 indicative for which of the ONUs the payload is intended. Based on the identifiers 232 of the respective error-corrected headers, the ONU may then be configured to perform identifying 202 downstream frames 221 with a payload 223 intended for the ONU. The identified downstream frames 221 thus have an identifier 232 within their header 222 that matches at least one of the one or more identifiers assigned to ONU 270. It is only thereafter that the ONU 270 FEC decodes 203 the one or more FEC codewords 210 that comprise at least a portion of the identified downstream frames. It will be apparent that an identified downstream frame may be spread across two or more adjacent FEC codewords 210 and, thus, FEC codewords comprising at least a portion of an identified downstream frame should be decoded. This may, for example, be achieved by a FEC decoder circuitry 250. The FEC decoder circuitry 250 may receive 262 the entire stream of FEC codewords 210, i.e. all FEC codewords, together with a control signal 263 indicative for which of the FEC codewords should be FEC decoded. FEC codewords that are not FEC decoded may, for example, be stripped of their parity 213. The FEC decoding 203 may thus be performed by the FEC decoder circuitry 250 on a bit stream comprising the error-corrected headers.

In doing so, the FEC decoding performed by the ONU 270 is limited to the FEC codewords comprising data intended for the ONU 270 rather than FEC decoding all FEC codewords 210. In other words, this allows avoiding that the ONU 270 unnecessarily FEC decodes FEC codewords 210 comprising idle downstream frames and/or downstream frames intended for other ONUs. This has the advantage that it can substantially reduce the power consumption of FEC decoding within the ONU 270 and, thus, reduce the power consumption of the ONU 270. The power consumption is particularly reduced when there is low traffic to the ONU 270, e.g. during nighttime, during which a substantial number of idle downstream frames are typically included within the downstream. It is a further advantage that the power consumption of this FEC decoding scales with the amount of traffic to the ONU 270. It is a further advantage that the reduction in power consumption is particularly high if LDPC is used as the FEC code, as the power consumption of LDPC decoding is relatively high and even may be one of the largest contributors to the total power consumption of ONUs, e.g. in 25G and 50G PONs. It is a further advantage that this can easily be incorporated into existing ONUs operating according to current PON standards.

In order to be able to error correct 201 the headers before FEC decoding 203, the ONU 270 should be capable of locating the respective headers 222 within the stream of FEC codewords 210. To this end, the ONU 270 may further be configured to locate the header 228 of a downstream frame 227 within the stream of FEC codewords 210 based on the length of the payload 223 of the preceding downstream frame 221. The length of the payload 223 may be included within the header 222 as a payload length indicator 231, e.g. a value retrieved from a payload length indication, PLI, field according to the ITU-T G.984 standard. In doing so, the ONU 270 can determine the position of header 228 based on the information within the error-corrected header 222 of the preceding downstream frame 221. By repeating this process at each header, the ONU 270 can determine the position of the respective headers within the successive downstream frames 220.

This localization process may thus start after error-correcting the first header 224 of the first downstream frame within the stream 210 of FEC codewords. The ONU 270 may further be configured to locate this first header 224 within the stream 210 of FEC codewords 221 based on a length of one or more synchronization structures 225, 226 that precede the downstream frames 220 within the stream 210 of FEC codewords. The one or more synchronization structures 225, 226 may, for example, be a PSBd structure 225 and a FS header 226 as described in relation to Fig. 1. The length of the one or more synchronization structures 225, 226 may be predetermined and/or fixed. Alternatively or complementary, the length of the one or more synchronization structures 225, 226 may be retrieved from one or more of the respective synchronization structures. For example, the length of a PSBd structure 225 may be predetermined and fixed according to the PON standard, while the length of the FS header 226 may be retrieved from a data field within the FS header 226 by ONU 270.

This however means that, if the ONU 270 fails to error correct 201 a header, it may lose track of the position of the successive headers as it cannot retrieve the payload length 231 from the header. To this end, headers may be inserted at predetermined positions within the stream 210 of FEC codewords to serve as hooks or pick-up points where the ONU can continue the steps 201 - 203 when it loses track of the header locations. For example, header 222 may be guaranteed at predetermined position 229. Such a predetermined position may be fixed, e.g. every 25 µs. Alternatively or complementary, the OLT can communicate the predetermined position 229 to the ONU in the downstream. In doing so, the ONU is provided in advance with some hooks or pick-up points where it knows that a header will be located.

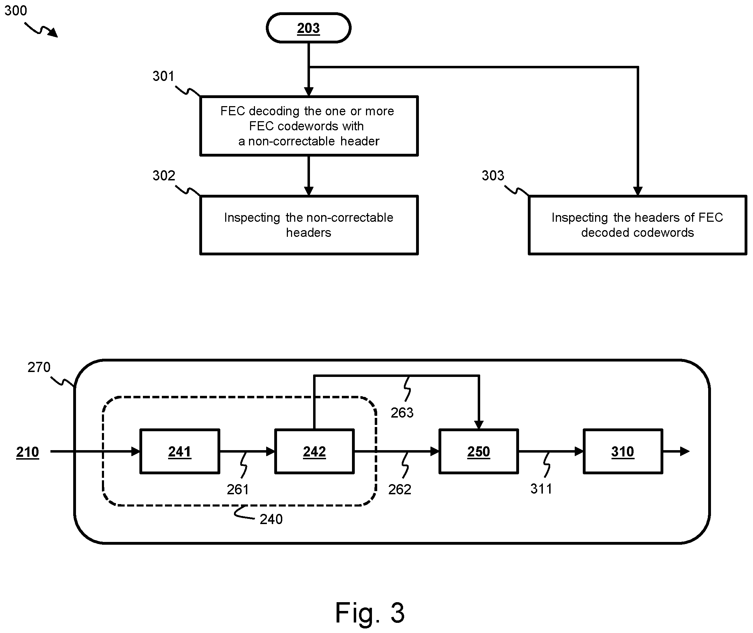

A header that is not correctable based on the one or more error correction bits 234 in step 201 may be referred to as a non-correctable header. Fig. 3 shows an example embodiment of ONU 270 that is further configured to handle non-correctable headers. To this end, the ONU 270 is further configured to perform FEC decoding 301 the one or more FEC codewords that comprise at least one header that is non-correctable. In other words, if a downstream frame header can not be corrected based on the one or more error correction bits or the ONU fails to correct the downstream frame header based on the one or more error correction bits, this non-correctable header may be FEC decoded regardless of whether it comprises a payload intended for the ONU or not. This allows avoiding that the ONU misses downstream frames comprising a payload intended for it. This can, for example, be achieved by adjusting the control signal 263 to the FEC decoder circuitry 250 such that the FEC codewords with non-correctable headers are also FEC decoded.

As it is not possible to inspect a non-correctable header prior to FEC decoding, e.g. by header inspection circuitry 242, the ONU 270 cannot extract the identifier from the non-correctable header prior to the FEC decoding and, thus, remains unaware whether the downstream frame of the non-correctable header is intended for ONU 270 or not. To this end, ONU 270 may further be configured to perform inspecting 302 the at least one non-correctable header for the identifier after FEC decoding 301 the one or more FEC codewords comprising the at least one non-correctable header. This can, for example, be achieved by an additional header inspection circuitry 310 configured to inspect at least the non-correctable headers of the decoded FEC codewords 311 decoded by FEC decoder circuitry 250. This allows determining whether the downstream frame with the at least one non-correctable header comprises a payload intended for the ONU. If so, the ONU may further process the payload of said downstream frame. This allows avoiding that the ONU misses downstream frames comprising a payload intended for it. The additional header inspection circuitry 310 may further be configured to inspect 303 the headers of the FEC codewords that were FEC decoded in step 203 a second time, i.e. in addition to the first header inspection performed by circuitry 242.

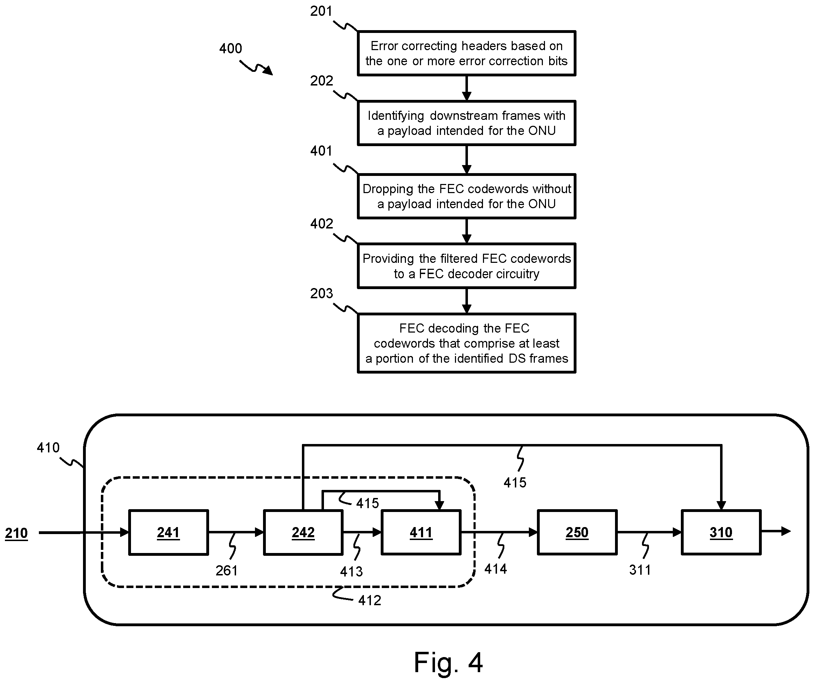

Fig. 4 shows an alternative example embodiment of an ONU 410 that is configured to filter 401 the FEC codewords that are to be decoded from the stream 210 of FEC codewords before providing 414 the codewords to the FEC decoder circuitry 250 for FEC decoding 203, contrary to providing all FEC codewords to the FEC decoder circuitry as described in relation to Fig. 2. This can be achieved by dropping 401 the FEC codewords without a payload intended for the ONU 410 and only providing the filtered FEC codewords 414 to the FEC decoder circuitry 250. To this end, the header inspection circuitry 242 may be configured to generate a control signal 415 indicating to filtering circuitry 411 which FEC codewords within the stream 210 comprise at least a portion of a payload intended for the ONU 410. The control signal 415 may further indicate FEC codewords that comprise at least one non-correctable header. The filtering circuitry may then be configured to receive the stream of FEC codewords 413 and filter them based on the control signal 415.

As the FEC decoder circuitry 250 may receive a filtered selection 414 of the FEC codewords, an additional header inspection 310 after FEC decoding the FEC codewords may fail because the additional header inspection circuitry 310 cannot determine the location of the headers within an FEC codeword following a dropped FEC codeword. This is because these locations may be determined based on payload length information within the headers of the dropped FEC codeword, which are no longer available to the additional header inspection circuitry 310 as they have been dropped.

To this end, the ONU 410 may further be configured to determine the position of a first header within the FEC codewords following a dropped FEC codeword and to communicate 415 this position to the additional header inspection circuitry 310. This can be achieved based on a payload length of the last downstream frame within the dropped FEC codeword and a number of parity bits within the dropped FEC codeword. The payload length of the last downstream frame can be obtained from the payload length indicator extracted upon inspecting the error-corrected header of the last downstream frame by header inspection circuitry 242. Alternatively, the ONU 410 may be configured to determine the position of a first header within each FEC codeword and communicate 415 this position to the additional header inspection circuitry 310.

The ONU 410 may further be configured to account for a number of parity bits at the end of the dropped FEC codeword, i.e. between the last downstream frame of the dropped FEC codeword and the first header in the following FEC codeword. The header inspection circuitry 242 may be aware of the number of parity bits and directly take this into account when providing 415 the position of the first header following a dropped FEC codeword to the additional header inspection circuitry 310. Alternatively, the additional header inspection circuitry 310 may account for the parity bits.

It will be apparent that the FEC decoding of upstream bitstream in an optical line terminal, OLT, has substantially similar problems as the FEC decoding of downstream bitstreams in ONUs. Typically, OLTs first FEC decode the entire upstream bitstream received from the ONUs within the PON. In doing so, the OLT obtains a complete FEC decoded version of the upstream bitstream, i.e. of all the FEC codewords. It is only after FEC decoding the entire upstream bitstream that the idle upstream frames, i.e. frames without a payload intended for the OLT, are identified and ignored by the OLT. This results in excessive and futile power consumption at the OLT, in particular when there is limited traffic within the PON and thus many idle upstream frames are present within the upstream bitstream. Therefore, the problem in OLTs merely differs from the problem in ONUs in that only idle frames are FEC decoded in vain.

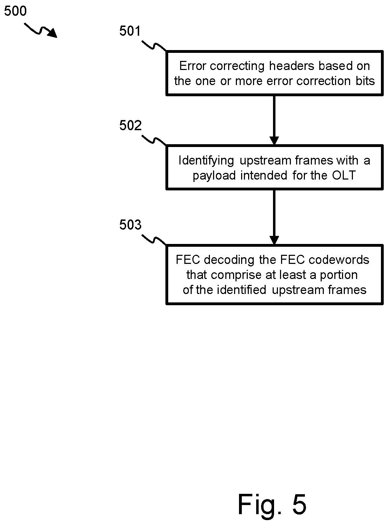

Fig. 5 shows steps 500 performed by an OLT according to an example aspect of the present disclosure. The OLT is configured to receive a stream of forward error correction, FEC, codewords comprising at least a portion of respective upstream frames transmitted by the ONUs. The respective upstream frames comprise a header and a payload. The respective headers include one or more error correction bits for error correcting the header by the OLT.

In a first step 501, the headers of the upstream frames are error corrected based on the one or more error correction bits by the OLT. It will be apparent that this can be achieved in a similar way as at the ONU side, as described in relation to Figs. 2 - 4. In a next step 502, upstream frames with a payload intended for the OLT are identified based on the error-corrected headers. This may, for example, be achieved by identifying idle upstream frames. Idle upstream frames may be identified based on the identifier included within the headers which typically have a predetermined value for idle frames, e.g. idle XGEM packets have an XGEM Port-ID of 0xFFFF according to the ITU-T G.9804 standard. Such idle frames typically do not comprise any user data but are used to maintain synchronization and integrity of the upstream transmissions. In a final step 503, the FEC codewords that comprise at least a portion of the identified upstream frames, i.e. non-idle upstream frames, are FEC decoded by the OLT. In other words, the FEC codewords that only comprise idle frames are not FEC decoded.

By first error correcting 501 the headers of the upstream frames based on one or more error correction bits and identifying 502 idle upstream frames based on the error-corrected headers, the FEC decoding 503 can thus be limited to the one or more FEC codewords that comprise at least a portion of non-idle upstream frames rather than FEC decoding all FEC codewords. Thus, this allows avoiding that the OLT unnecessarily FEC decodes FEC codewords that only comprise idle upstream frames. This has the advantage that it can substantially reduce the power consumption of FEC decoding within the OLT and, thus, reduce the power consumption of the OLT. The power consumption is particularly reduced when there is low traffic to the OLT, e.g. during nighttime, during which a substantial number of idle upstream frames are typically included within the upstream bursts. It is a further advantage that the power consumption of this FEC decoding scales with the amount of traffic to the OLT. It is a further advantage that this can easily be incorporated into existing OLTs operating according to current PON standards.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An optical network unit, ONU (131 - 134), configured to communicate in a passive optical network, PON (100), with an optical line terminal, OLT (110); wherein the ONU is configured to receive a stream (210) of forward error correction, FEC, codewords (211) comprising at least a portion of respective downstream frames (221) broadcasted by the OLT over the PON; wherein the respective downstream frames comprise a header (222) and a payload (223); and wherein the header includes one or more error correction bits (234) for error correcting the header by the ONU, and an identifier (232) indicative for which of the one or more ONUs the payload is intended; wherein the ONU is **characterized in that** it is further configured to perform:
- first, error correcting (201, 241) the headers (222) of the downstream frames (221) based on the one or more error correction bits (234) within the respective headers;
- then, identifying (202, 242) downstream frames (221) with a payload (223) intended for the ONU based on the identifier (232) within the error-corrected headers; and
- thereafter, FEC decoding (203, 250) the one or more FEC codewords that comprise at least a portion of the identified downstream frames.

2. The optical network unit, ONU, according to any of the preceding claims, further configured to perform locating a first header within the stream of FEC codewords based on a length of one or more synchronization structures that precede the downstream frames within the stream of FEC codewords.

3. The optical network unit, ONU, according to any of the preceding claims, further configured to perform locating a header of a downstream frame within the stream of FEC codewords based on a payload length of a preceding downstream frame.

4. The optical network unit, ONU, according to any of the preceding claims, further configured to perform locating one or more headers of the downstream frames at respective predetermined positions within the stream of FEC codewords.

5. The optical network unit, ONU, according to any of the preceding claims, further configured to perform FEC decoding (301) the one or more FEC codewords (211) that comprise at least one header (222) that is non-correctable based on the one or more error correction bits (234).

6. The optical network unit, ONU, according to claim 5, further configured to perform inspecting (302) the at least one non-correctable header for the identifier after FEC decoding (301) the one or more FEC codewords comprising the at least one non-correctable header.

7. The optical network unit, ONU, according to any of the preceding claims, further configured to filter the stream of FEC codewords before the FEC decoding (203) by dropping (401) the FEC codewords without a payload intended for the ONU and providing (402) the remaining FEC codewords to a FEC decoder circuitry (250) configured to FEC decode the remaining FEC codewords.

8. The optical network unit, ONU, according to claim 7, further configured to perform determining the position of a first header within at least each FEC codeword following one ore more consecutive dropped FEC codewords, based on a payload length of the last downstream frame within the one or more dropped FEC codewords and a number of parity bits within the one or more dropped FEC codeword.

9. The optical network unit, ONU, according to any of the preceding claims, further configured to perform FEC decoding of a FEC codeword if the number of downstream frames within the FEC codeword exceeds a threshold.

10. The optical network unit, ONU, according to any of the preceding claims, wherein the FEC codewords (211) are encoded by a Low-Density Parity-Check, LDPC, code.

11. The optical network unit, ONU, according to any of the preceding claims, wherein the FEC codewords (211) are encoded by a Reed Solomon code.

12. The optical network unit, ONU, according to any of the preceding claims, wherein the one or more error correction bits (234) comprise bits encoded by a Bose-Chaudhuri-Hocquenghem, BCH, code.

13. The optical network unit, ONU, according to any of the preceding claims, wherein the stream (210) of FEC codewords is a physical layer, PHY-, frame.

14. An optical line terminal, OLT, configured to communicate in a passive optical network, PON, with one or more optical network units, ONUs; wherein the OLT is configured to receive a stream of forward error correction, FEC, codewords comprising at least a portion of respective upstream frames transmitted by the ONUs; wherein the respective upstream frames comprise a header and a payload; and wherein the header includes one or more error correction bits for error correcting the header by the OLT; wherein the OLT is **characterized in that** it is further configured to perform:
- first, error correcting (501) the headers of the upstream frames based on the one or more error correction bits within the respective headers;
- then, identifying (502) upstream frames with a payload intended for the OLT based on the error-corrected headers; and
- thereafter, FEC decoding (503) the one or more FEC codewords that comprise at least a portion of the identified upstream frames.
